# EUROPEAN PATENT SPECIFICATION

(11) **EP 0 536 506 B1**
(45) Date of publication and mention of the grant of the patent: **02.10.1996**
(21) Application number: 92113984.6
(22) Date of filing: 17.08.1992
(51) Int. Cl.: F16G 5/06, B29D 29/00, F16G 1/08

(54) **Reinforced belt and method and device for the production thereof**
Verstärkter Riemen und Verfahren und Vorrichtung zur Herstellung
Courroie renforcée et méthode et procédé de fabrication correspondants

(30) Priority: 11.10.1991 WO PCT/EP91/01939
(43) Date of publication of application: 14.04.1993
(73) Proprietor: FENRIR AG, CH-6300 Zug (CH)
(72) Inventor: Schanin, Jonathan, IL-32202 Haifa (IL); Harel, Shmuel, (IL)
(74) Representative: Lauer, Joachim, Dr.

(56) References cited:
- DE-A- 1 650 659
- DE-A- 4 016 367
- US-A- 2 983 637
- US-A- 4 414 047
- US-A- 4 415 397
- SOVIET INVENTIONS ILLUSTRATED, section Q64, week 8545, 6th December 1985, accession no. 85-281833/45, Derwent Publications Ltd, London, GB; & SU-A-1153 146 (ODESS POLY) 30-04-1985

## Description

### Technical Field

The present invention relates to an endless belt including a reinforcing load-carrying layer, and to a method for producing such a belt. It further relates to a device for carrying out such method.

### Description of the Prior Art

U.S. Patent 4,414,047 (Wetzel et al.) and U.S. Patent 4,415,397 (Wetzel) provide a load-carrying layer by helically winding a cord-like load-carrying member on an elastomeric base. The pitch angle formed by the winding produces an unbalanced force component in the belt perpendicular to the direction of motion of the belt. This perpendicular force-component is countered by the driver and driven wheels or pulleys, thus inducing wear and reducing belt life and efficiency.

German Patent 40 16 367 (Schanin et al.) discloses a method for producing reinforced belts using preformed load-carrying members having a cord embedded in a solid but softenable elastic material. In one embodiment a load-carrying layer is provided by winding a load-carrying member parallel to the elastomeric base and intended motion, and stepping sideways with the load-carrying member just prior to the completion of each turn. This method provides an essentially balanced belt, but still suffers from an unbalanced transition area due to the sideward steps. Again this design produces an unbalanced force component in the belt, though limited to the transition area, perpendicular to the direction of rotation, and suffers from the limitations above.

A better solution to this problem is known from Soviet Inventions Illustrated, section Q64, week 8545, December 6 1985, access no. 85-281833/45, Derwent Publications Ltd., London, GB, & SU,A,1153146 (ODESS POLY) April 30, 1985. This publication shows a belt with two cord-like load-carrying members which are laid inside the belt on the same level, with one load-carrying member wound in a left-hand spiral laid on one side of the belt's lengthwise axis, and the other load-carrying member with a right-hand spiral on the other side. When the belt is in operation it is not pressed against the pulley flange since the lateral efforts caused by the angle of one load-carrying member is balanced by that of the other. A similar structure is also known from DE,A1,1650659 (CONTINENTAL GUMMI).

US,A,2983637(SCHMIDT) shows a belt with two load-carrying members wound in two layers in opposite directions to form helices having an opposite inclination or pitch so that the longitudinal pull or tension is again balanced and the tendency of the belt to creep sidewise is eliminated.

### Summary of the Invention

It is the main object of the present invention to provide an essentially balanced belt with an enhanced strength and belt life. This is achieved according to the present invention by a belt as claimed in one of claims 1 - 6.

It is a further object of the present invention to provide a more efficient method for the manufacturing of the afore mentioned belt by reducing the time required for winding the load carrying members. According to the present invention this is achieved by a method as claimed in one of claims 7 - 10.

It is yet another object of the present invention to provide a relatively simple and inexpensive device for carrying out the afore mentioned method for the manufacturing of the above mentioned essentially balanced belt. According to the present invention this is achieved by a device as claimed in one of claims 11 - 17.

### Brief Description of the Drawings

Preferred embodiments will now be described in more detail with reference to the following illustrative figures.

In the drawings:
Fig. 1 is a perspective view showing an endless belt;
Fig. 2 is a perspective view showing the cross section of an endless drive belt including a load-carrying layer;
Fig. 3 is a partial section of a load-carrying layer of a belt according to the invention;
Fig. 4 is a partial section of a load-carrying layer of yet another belt according to the invention;
Fig. 5 is a schematic presentation of a device according to the invention;
Fig. 6 is a side view of the device of Fig. 5.
Fig. 7 is a schematic representation of a guiding assembley; and
Fig. 8 is a schematic representation of another guiding assembly.

### Description of the Preferred Embodiments

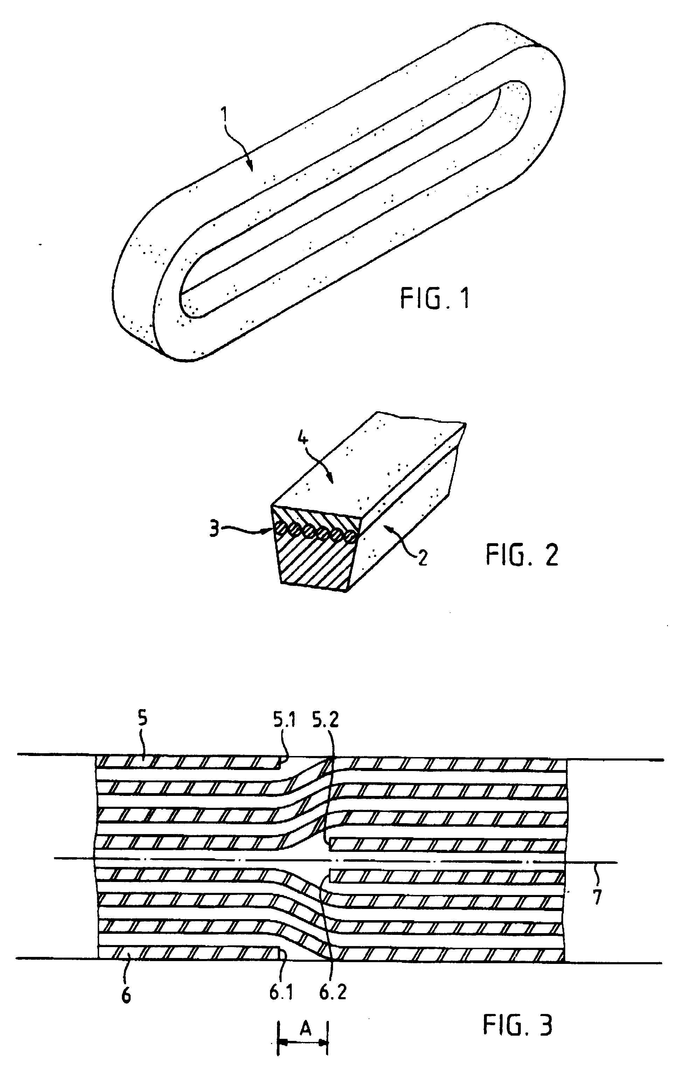

Fig. 1 shows an endless belt 1 in general. The drive belt of Fig. 2 comprises a body-member 2, known in the art as compression member, a load-carrying layer 3 composed of several turns each of an even number of cord-like load-carrying members, and a tension member 4. For the body-member 2 and the tension member 4 preferably elastomeric materials such as thermoplastic materials are used. The load-carrying members are preferably made of synthetic cord such as polyesther or aramid. The body-member 2, the turns of the load-carrying members and the tension member 4 are firmly bonded together. The bonding may be achieved by the methods as described in the above mentioned German Patent 40 16 367. The disclosure of these methods is incorporated herein by reference.

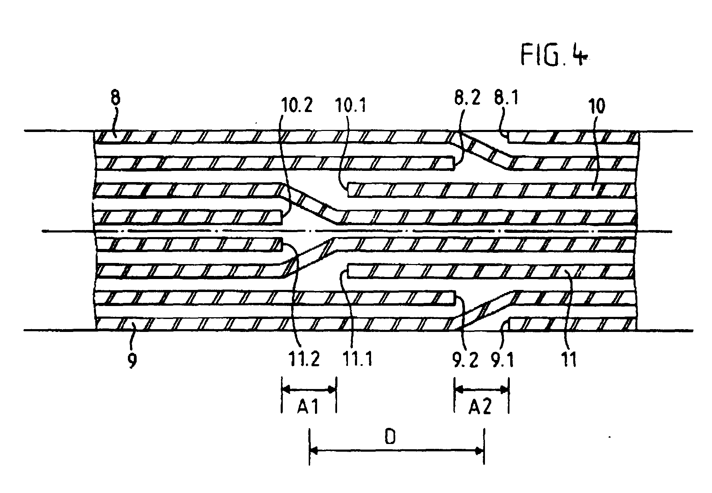

The load-carrying layer 3 of the belt as shown in Fig. 2 may be of the type as shown in Fig. 3 or 4. Other configurations are, however, possible and will also be explained in the following.

In the embodiment shown in Fig. 3 just one pair of two load-carrying members 5 and 6 with inner ends 5.2, 6.2 and outer ends 5.1, 6.1 extend within the load-carrying layer in almost four full turns each. Load-carrying member 5 extends in a clockwise sense while load-carrying member 6 extends in the opposite, counterclockwise sense. In both embodiments the two load-carrying members 5 and 6 are arranged symmetrically with respect to central line 7 which longitudinally extends in the middle of the width of body-member 2. The two load-carrying members 5 and 6 form two mirror image halves. Both load-carrying members 5, 6 form a pitch angle and an offset with respect to the central line 7 only within a limited longitudinal transition zone A of the load-carrying layer. Outside of zone A the turns of the load carrying members 5 and 6 extend parallel to central line 7. Compared with the known configurations in which the load-carrying members are helically wound and form a constant pitch angle with respect to central line 7 the configuration of Fig. 3 results in a greater effective length of the two load-carrying members and thus in a stronger the belt. An enhancement of the effective length of the load-carrying members of 10 - 25 % can easily be achieved.

Another important feature of the embodiment shown in Fig. 3 is that the outer ends 5.1 and 6.1 of load-carrying members 5 and 6 are located outside of transition zone A so that both load-carrying members 5 and 6 end straight and parallel to central line 7 and to the outer edges 2.1 and 2.2 of body-member 2. Load-carrying members 5 and 6 do not run out of the width of body member 2 but fully remain within that width. They therefore do not need to be sliced along the outer edges 2.1 and 2.2 of body member 2 like this is required and unavoidable over a considerable length in the known configurations in which the load-carrying members are helically wound and do run out of the width of body-member 2 under a very small pitch angle with respect to central line 7. When using the method as disclosed in German Patent 40 16 367 for the production of the belt in which method use is made of preformed load-carrying members with a cord embedd in an elastic material the cord itself will not reach the outer edges of body member 2 but will remain fully embedded in the elastic material even at its outer ends. An additional top cover layer required in the known configurations for the lateral protection of the cord may be omitted in this case with advantage.

It is preferred when the end surfaces at ends 5.1 and 6.1 are oriented with their normal directions in the direction of central line 7 or towards the inside of said load carrying layer.

In transition zone A the pitch angle the load-carrying members form with respect to central line 7 should be greater than 45°. A value between 70° and 89° is, however, preferred.

In the embodiment of Fig. 4 the load-carrying layer is constituted by two pairs of load-carrying members 8 - 11. In such case it is preferred to have the inner ends 8.2 - 11.2 and the outer ends 8.1 - 11.1 of both pairs of load-carrying members 8 - 11 and thereby also the transitional zones Al, A2 longitudinally displaced with respect to each other (displacement D).

More than two pairs of load-carrying members could, of course, also be used for producing a balanced belt according to the present invention. This would, however, only be suitable for belts having a relatively large width such as conveyer belts for example.

It is preferred to produce the load-carrying layers according to the present invention by simultaneously winding an even number (preferably just two) of load-carrying members in pairs in mirror symmetry with respect to the central line 7 of the load-carrying layer in a plurality, but at least more than one full turn each.

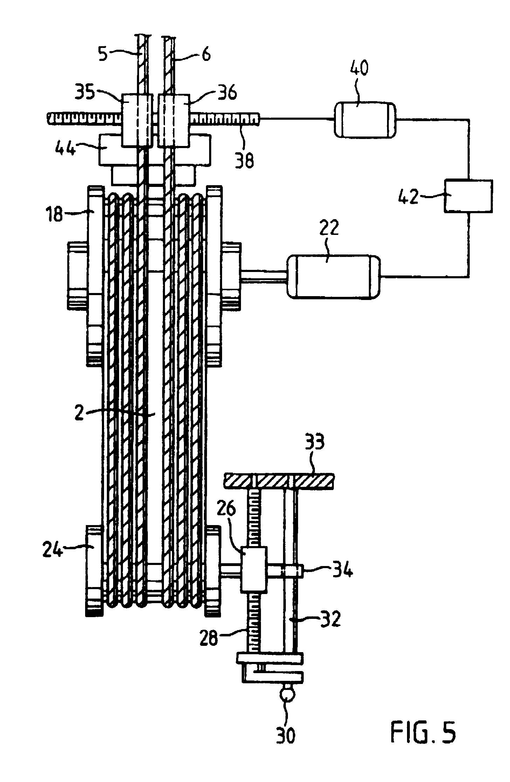

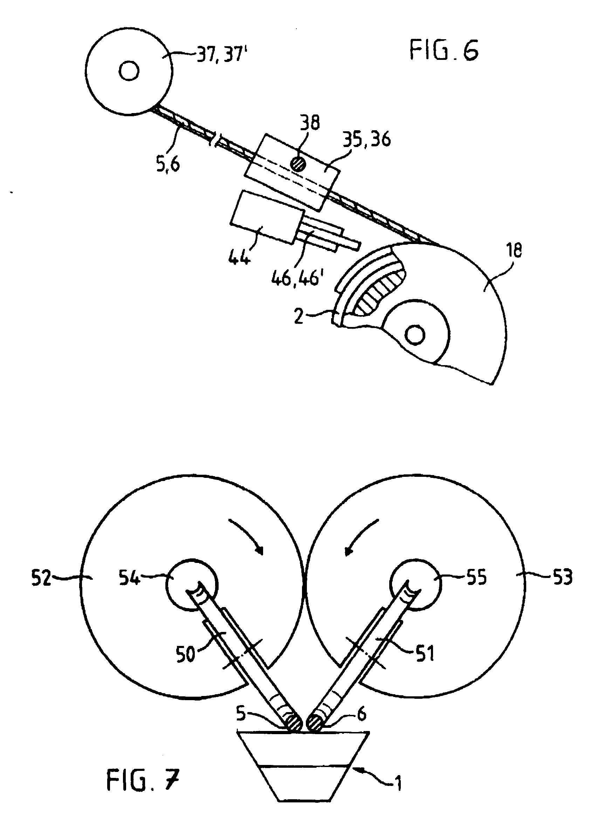

The device represented in the schematic drawings of Figs. 5 and 6 is provided with a belt-building or molding pulley 18 the groove profile of which matches the flanks of the compression member 2, and which can be rotated by means of variable-speed gearmotor 22. A second, idler pulley 24 is arranged at a distance from, and in alignment with pulley 18. The idler pulley 24 is rotatably mounted on a block 26 provided with an internal thread and riding on a screw 28 having one degree of freedom in rotation only. Thus, rotating the screw 28 (by means of a handle 30) will cause the block 26, including the idler pulley 24, to perform a translatory movement, permitting the center distance between pulley 18 and the idler pulley 24 to be varied. The bar 32 passing through a fork-like projection 34 attached to the block 26 prevents the latter from rotating about the screw 28, while allowing the above translatory movement. The screw 28 and the bar 32 are mounted between brackets 33 which are obviously stationary relative to the idler pulley 24 and its mounting block 26.

Further seen are two guide blocks 35 and 36 through which pass two load-carrying members 5 and 6, drawn off two supply reels 37 and 37' (not shown), on their way to be wound onto the body member 2. The guide blocks 35 and 36 are mounted on a partially left and partially right threaded lead screw 38. The left guide block 35 is provided with an internal left thread. The right guide block 36 is provided with an internal right thread. The lead screw 38 is connected to a variable-speed stepper motor 40, the speed of which can be maintained at a predeterminable ratio relative to the gear-motor 22 driving the molding pulley 18, by means of a control element 42. The lead screw 38, when rotated will cause the guide blocks 35 and 36 to perform a translatory movement in opposite directions parallel to its axis.

Mounted below the guide blocks 35, 36 there is provided a blower 44 producing jets of hot air each which nozzles 46 and 46' (not shown) direct towards the points where the load-carrying members 5 and 6, having passed the guide blocks 35 and 36, make contact with the surface of the body-member 2. The heat is required for the bonding process.

The device as described above is operated as follows: A body-member 2 is mounted on the two pulleys, the molding pulley 18 and the idler pulley 24 which, by turning handle 30 are then moved apart until the endless compression member belt is fairly tight. The forward ends of two load-carrying members 5 and 6 are then drawn off the supply reels 37 and 37', threaded through the guide blocks 35 and 36 (which have been set to their initial transversal positions each, i.e. opposite the outer edges of body-member 2) and attached to the body-member 2, e.g. by being spot-welded to the surface thereof. The hot-air jets are now turned on and the molding pulley 18 is set rotating by actuating the gear motor 22, setting in motion the body-member 2, and, thereby dragging along the load-carrying members 5 and 6 which, heated by the jets, are bonded to the equally heated (and thereby softened) surface of the body-member 2.

To obtain the configuration of Fig. 3 a synchronous stepping action of the guide block 35 and 36 just prior to the completion of each revolution of the body member 2 is required. Such stepping action is controlled by the control element 42 which starts lead screw 38 intermittently to rotate, and thereby to carry guide blocks 35 and 36 in several steps towards opposite directions. The required relationship between the rotational speed of the pulley 18 and the linear speed of guide blocks 35 and 36 is not only a function of the width of the body-member 2 and the diameter or width of the load-carrying members 5 and 6, but also of the surface speed of the body-member 2, its length and the desired length of the transition zone(s).

In particular when the production methods as disclosed in German Patent 40 16 367 are used, the outer ends of the load-carrying members can be produced by a cutting action carried out right at the completion of the winding thereof.

The configuration of Fig. 4 may be produced in a two step procedure with the device as described here before, or by using multiple guide blocks in a one step procedure.

The application of the tension member 12 follows similar lines, except that a different guide block is required and that the latter performs no transverse movement, being in fixed alignment with the belt building pulley 18.

In the device shown in Fig. 5 and 6 it would also be possible to use instead of lead screw 38 and guide blocks 35 and 36 an assembly as it is shown in Fig. 7. There two guide wheels 50, 51 for the load carrying members 5 and 6 are provided which are rotatably mounted in guide blocks 52 and 53. Guide blocks 52 and 53 are mounted also capable of rotation on fixed axles 54 and 55, the orientation of which is perpendicular to the orientation of lead screw 38 in the embodiments of Fig. 5 and 6. Drive means (not shown) like the variable speed motor 40 would have to be provided to impart guide blocks 52 and 53 during winding a rotational movement in opposite directions on the axles 54 and 55.

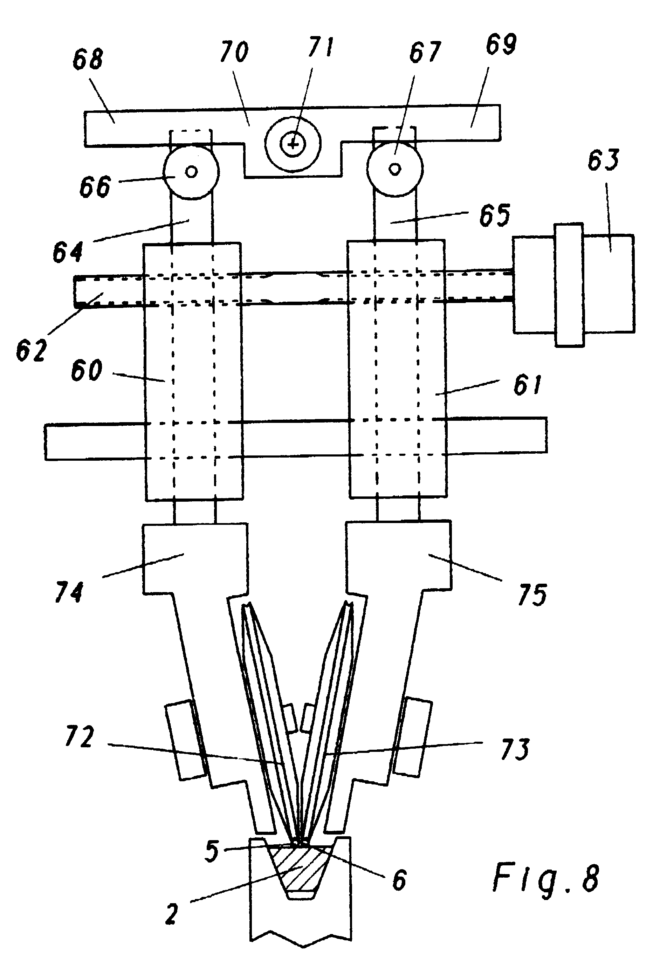

Fig. 8 shows another guiding assembly in which again two guiding blocks 60 and 62 are mounted on a partially left and partially right threaded lead screw 62. The left guide block 60 is provided with an internal left and the right guide block 61 with an internal right thread, respectively. The lead screw 62 is again connected to a variable speed-stepper motor 63, the operation of which will cause the guide blocks 60 and 61 to perform a linear translatory movement in opposite directions. Mounted for linear motion up or down in guide blocks 60 and 61 are rods 64 and 65 which are provided with rollers 66, 67 at their upper ends. The rollers 66, 67 are in contact with the arms 68, 69 of a two-arm lever 70 having its axis at 71. Lever 70 forms a coupling means between rods 64, 65 which forces said rods to always move in opposite directions. At the lower ends of rods 64, 65 two wings 74 and 75 are fixedly mounted which carry guide wheels 72, 73 of the type as shown in Fig. 7 with an inclined orientation with respect to each other. The guide wheels are provided with a circumferential groove for guiding the load-carrying members 5, 6 directly to the body member 2. By guide wheels 72, 73 pressure is exerted to the load-carrying members 5, 6 which are thereby pressed against the upper surface of body-member 2. With the guiding assembly of Fig. 8 it is possible to keep this pressure essentially constant during winding and identical with respect to both load-carrying members 5, 6. This is in particular of importance when use is made from the production method as disclosed in German Patent 40 16 367. That the pressure remains essentially constant during winding is mainly due to the linear movement of guide blocks 60, 61 (instead of a rotational movement thereof as in the assembly shown in Fig. 7). That the pressure exerted on both load-carrying members 5 and 6 keeps identical during winding is mainly due to the coupling means 70 which for example forces rod 64 to move down and thereby to enhance the pressure on load-carrying member 5 when rod 65 is forced to move up due to a variation of the thickness of load-carring member 6 for example. The inclination of both guiding wheels 72 and 73 has the advantage that the outer egdes of both guide wheels 72, 73 come closer to the surface of the body-member 2 than the respective inner edges, thereby allowing the load-carrying members and/or the different turns thereof (when winding is carried out in the outside direction) to be wound very close together and preventing them from slipping out the guiding groove. No additional securing means are required.

The embodiments given to illustrate the invention describe plain V-belts. It should, however, be understood that the invention is also applicable with other types of belts. In particular drive belts such as V-belts, variable speed belts, timing belts, ribbed belts and flat belts or flat or profiled conveyer belts may be mentioned.

## Claims

1. An endless belt (1) including a load carrying layer(3), wherein said load carrying layer (3) has a longitudinal extension
wherein said load-carrying layer (3) is constituted by an even number of cord-like load-carrying members(5,6;8-11),
wherein said load carrying members (5,6;8-11) extend within said load-carrying layer (3) clockwise or counterclockwise in a plurality, but at least more than one full turn each,
wherein said load-carrying members (5,6,8-11) form a pitch angle each with respect to said longitudinal extension only within a limited longitudinal transition zone (A;A1,A2) each;
wherein said load-carrying members (5,6;8-11) extend in parallel with said longitudinal extension outside said transition zone (A;A1,A2) each; and
wherein said load-carrying members (5,6;8-11) are arranged in pairs in mirror-symmetry with respect to the central line (7) of the belt (1).

2. The belt according to claim 1, wherein said load-carrying members (5,6;8-11) have outer ends (5.1,5,2,6.1,6.2;8.1,8.2-11.1,11.2) each and wherein said outer ends are located outside said transition zone(s) (A;A1,A2) within said load carrying layer (3) each.

3. The belt according to claim 2, wherein said outer ends (5,1,5.2,6,1,6.2;8,1,8.2-11.1,11.2) have end surfaces and wherein said end surfaces are oriented with their normal directions in the direction of said longitudinal extension or towards the inside of said load carrying layer (3).

4. The belt according to one of claims 1 - 3, wherein said pitch angle said load-carrying members (5,6;8-11) form within said limited transition zones (A;A1,A2) is at least greater than 45° but has a value between 70° and 89° preferably.

5. The belt according to one of claims 1 - 4, wherein said load-carrying layer (3) is constituted by only two load-carrying members (5,6) and wherein each of said two load-carrying members (5,6) extend within said load carrying layer (3) in more than three but less than four full turns.

6. The belt according to one of claims 1 - 6, wherein said load-carrying members (5,6;8-11) have outer ends (5,1,5.2,6,1,6.2;8,1,8.2-11.1,11.2) each, the outer ends of different pairs of load-carrying members (8,9;10,11) being longitudinally displaced with respect to each other.

7. A method for producing an endless belt (1) including a load-carrying layer (3) as claimed in one of claims 1 - 6 comprising the step of winding load-carrying members (5,6;8-11) in pairs in mirror symmetry with respect to the central line (7) of the belt in a plurality, but at least more than one full turn each with a pitch angle with respect to the longitudinal extension of the belt (1) only within a limited longitudinal transition zone (A;A1,A2) and in parallel with said longitudinal extension outside said transition zone (A;A1,A2).

8. The method of claim 7, wherein at least two load-carrying members (5,6; 8,9;10,11) are wound simultaneously.

9. The method of one of claims 7 or 8, wherein the outer ends (5.1,5.2,6.1,6.2;8.1,8.2-11.1,11.2) of said load-carrying members (5,6;8-11) are produced by a cutting action carried out at the completion of the winding thereof outside said transition zones (A;A1,A2).

10. The method of claim 9, wherein said cutting is carried out such that the resulting end or cutting surfaces are oriented with their normal directions in the direction of said longitudinal extension or to the inside of said load-carrying layer (3).

11. A device for carrying out the method as claimed in one of claims 7 - 10 comprising:
a belt building pulley (18) having a width just matching the width of one single belt (1);
first drive means (22) for rotating said belt building pulley (18);
an idler pulley (24) arranged in alignment with said belt building pulley (18) and at a variable distance;
two guide means (35,36;52,53;60,61) for synchronously guiding at least one pair of load-carrying members (5,6) during winding thereof;
second drive means (40;63) to impart said guide means (35,36;52,53;60,61) a movement intermittently during rotation of said belt building pulley (18) in a direction parallel to the axes of rotation thereof; and
control means (42) to control the relationship between the rotational speed of said belt-building pulley (18) and the speed of the movement of said guide means (35,36;52,53;60,61), wherein said control means (42) enables said movement of said guide means (35,36;52,53;60,61) just prior to the completion of each full revolution of a compression member (2) mounted on the belt building pulley (18) and the idler pulley (24) just for a given period of time so that the translatory movement is completed before the time required for one full revolution of said compression member (2) in order to provide a stepwise translatory movement of said guide means (35,36;52,53;60,61).

12. The device of claim 11, wherein said guide means comprise:
a partially left and partially right threaded lead screw (38;62) being rotationally driven by said second drive means (40;63);
a left guide block (35;60) with an internal left thread mounted on said left threaded part of said lead screw (38;63); and
a right guide block (36;61) with an internal right thread mounted on said right threaded part of said lead screw (38;63).

13. The device of claim 11, wherein said guide means comprise:
a left guide block (52) capable of rotation on a first axle (54);
and
a right guide block (53) capable of rotation on a second axle (55) which is orientated in parallel to said first axle (53);
said second drive means being connected to said left and said right guide block to impart said guide blocks (52,53) a rotational movement intermittently in opposite directions on said first and second axles (54,55).

14. The device of one of claims 11 - 13, wherein said guide means further comprise guide wheels (50,51;72,73) provided with a circumferential groove for the load-carrying members, said guide wheels (72,73;50,51) being rotatably fixed at said guide blocks (52,53;60,61) at least via intermediate elements (64,65).

15. The device of claim 14, wherein said guide wheels (72,73) are rotatably fixed at said guide blocks (60,61) with an inclined orientation with respect to each other.

16. The device of claim 14 or 15, wherein rods (64,65) as intermediate elements are provided linearly movable within said guide blocks (60,61) each, wherein said guide wheels (72,73) are rotatably fixed at said movable rods (64,65) and wherein coupling means (66-71) are provided for coupling the two rods (64,65) such that they are forced to always move in opposite directions.

17. The device of one of claims 11 - 16, wherein said first and second drive means (22,40;63) are variable speed stepper motors.

## Patentansprüche

1. Endloser Treibriemen (1) umfassend eine Zugträgerschicht (3),
wobei die Zugträgerschicht (3) eine Längserstreckung hat,
wobei die Zugträgerschicht (3) gebildet wird durch eine gerade Anzahl von fadenartigen Zugträgerelementen (5, 6; 8-11),
wobei die genannten Zugträgerelemente (5, 6; 8-11) sich innerhalb der Zugträgerschicht (3) im Uhrzeigersinn oder im Gegenuhrzeigersinn in einer Mehrzahl, jedoch zumindest mehr als einer vollen Windung jeweils erstrecken,
wobei die Zugträgerelemente (5, 6; 8-11) jeweils einen Steigungswinkel bezüglich besagter Längserstreckung jeweils ausschliesslich innerhalb einer begrenzten longitudinalen Übergangszone (A; A1, A2) bilden,
wobei die genannten Zugträgerelemente (5, 6; 8-11) sich ausserhalb der Übergangszone (A; A1, A2) jeweils parallel zu besagter Längserstreckung erstrecken, und
wobei die Zugträgerelemente (5, 6; 8-11) paarweise spiegelsymmetrisch in Bezug auf die zentrale Linie (7) des Treibriemens (1) angeordnet sind.

2. Treibriemen nach Anspruch 1, wobei die Zugträgerelemente (5, 6; 8-11) jeweils äussere Enden (5.1, 5.2, 6.1, 6.2; 8.1, 8.2-11.1, 11.2) haben und wobei diese äusseren Enden jeweils ausserhalb der genannten Übergangszonen (A; A1, A2) innerhalb der genannten Zugträgerschicht (3) angeordnet sind.

3. Treibriemen nach Anspruch 2, wobei die äusseren Enden 5.1, 5.2, 6.1, 6.2; 8.1, 8.2 - 11.1, 11.2) Stirnflächen haben und wobei diese Stirnflächen mit ihren Normalrichtungen in Richtung besagter Längserstreckung oder gegen die Innenseite der Zugträgerschicht (3) orientiert sind.

4. Treibriemen nach einem der Ansprüche 1-3, wobei der genannte Steigungswinkel, den die zugträgerelemente (5, 6; 8-11) innerhalb der begrenzten Übergangszonen (A; A1, A2) bilden, grösser ist als 45°, jedoch vorzugsweise einen Wert zwischen 70° und 89° aufweist.

5. Treibriemen nach einem der Ansprüche 1-4, wobei die Zugträgerschicht (3) gebildet wird durch lediglich zwei Zugträgerelemente (5, 6) und wobei jedes der beiden Zugträgerelemente (5, 6) sich innerhalb der Zugträgerschicht (3) in mehr als drei, jedoch weniger als vier vollen Windungen erstreckt.

6. Treibriemen nach einem der Ansprüche 1-6, wobei die Zugträgerelemente (5, 6; 8-11) jeweils äussere Enden (5.1, 5.2, 6.1, 6.2; 8.1, 8.2 - 11.1, 11.2) aufweisen und wobei die äusseren Enden von unterschiedlichen Paaren von Zugträgerelementen (8.9, 10, 11) in Längsrichtung gegeneinander versetzt angeordnet sind.

7. Verfahren zur Herstellung eines endlosen Treibriemens (1) mit einer Zugträgerschicht (3) nach einem der Ansprüche 1-6 umfassend den Schritt des Wickelns von Zugträgerelementen (5, 6; 8-11) paarweise in Spiegelsymmetrie in Bezug auf die zentrale Linie (7) des Treibriemens in jeweils einer Mehrzahl jedoch wenigstens mehr als einer vollständigen Windung mit einem Steigungswinkel in Bezug auf die Längserstreckung des Treibriemens (1) lediglich innerhalb einer begrenzten longitudinalen Übergangszone (A; A1, A2) und parallel zu dieser Längserstreckung ausserhalb der genannten Übergangszone (A; A1, A2).

8. Verfahren nach Anspruch 7, wobei wenigstens zwei Zugträgerelemente (5, 6; 8,9; 10, 11) gleichzeitig gewickelt werden.

9. Verfahren nach einem der Ansprüche 7 oder 8, wobei die äusseren Enden (5.1, 5.2, 6.1, 6.2; 8.1, 8.2-1.1, 1.2) der Zugträgerelement (5.6; 8-11) durch Schneiden am Ende ihrer Wicklung ausserhalb der Übergangszonen (A; A1, A2) hergestellt werden.

10. Verfahren nach Anspruch 9, wobei das Schneiden so ausgeführt wird, dass die sich ergebenden End- oder Schnittflächen mit ihren Normalrichtungen in Richtung der genannten Längserstreckung oder zur Innenseite der Zugträgerschicht hin (3) hin ausgerichtet sind.

11. Vorrichtung zur Durchführung des Verfahrens nach einem der Ansprüche 7-10 umfassend:
eine Treibriemenherstellungsrolle (18) mit einer Breite, welche der Breite eines einzelnen Treibriemens (1) entspricht;
erste Antriebsmittel (22) zur Rotation der Treibriemenherstellungsrolle (18);
eine Freilaufrolle (24) angeordnet in Ausrichtung mit der Treibriemenherstellungsrolle (18) sowie in einem variablen Abstand von dieser;
zwei Führungsmittel (35, 36; 52, 53; 60, 61) zur synchronen Führung wenigstens eines Paares von Zugträgerelementen (5, 6) während ihrer Wicklung;
zweite Antriebsmittel (40; 63) um die Führungsmittel (35, 36; 52, 53; 60, 61) intermittierend in Bewegung zu versetzen während der Rotation der Treibriemenherstellungsrolle (18) in einer Richtung parallel zu deren Rotationsachse; und
Steuermittel (42) zur Steuerung des Verhältnisses zwischen der Rotationsgeschwindigkeit der Treibriemenherstellungsrolle (18) und der Geschwindigkeit der Bewegung der genannten Führungsmittel (35, 36; 52, 53; 60, 61), wobei die Steuermittel (42) die Bewegung der Führungsmittel (35, 36; 52, 53; 60, 61) jeweils kurz vor der Beendigung jeder vollen Umdrehung eines Druckelements (2), welches auf die Treibriemenherstellungsrolle (18) und die Freilaufrolle (24) montiert ist, jeweils für eine vorgegebene Zeitperiode ermöglichen, sodass die translatorische Bewegung beendet ist vor der Zeit, welche für eine volle Umdrehung des Druckelements (2) benötigt wird, um eine schrittweise translatorische Bewegung der Führungsmittel (35, 36; 52, 53; 60, 61) zu veranlassen.

12. Vorrichtung nach Anspruch 11, wobei die Führungsmittel umfassen:
eine teilweise mit einem Linksgewinde und teilweise mit einem Rechtsgewinde versehene Führungsspindel (38; 62), welche von den genannten zweiten Antriebsmitteln (40; 63) drehangetrieben ist;
einen linken Führungsblock (35; 60) mit einem Innen-Linksgewinde, welcher auf dem Teil mit dem Linksgewinde der genannten Führungsspindel (38; 63) montiert ist; und
einen rechten Führungsblock (36; 61) mit einem Innen-Rechtsgewinde, welcher auf dem Teil mit dem Rechtsgewinde der Führungsspindel (38; 63) montiert ist.

13. Vorrichtung nach Anspruch 11, wobei die Führungsmittel umfassen:
einen linken Führungsblock (52), welcher auf einer ersten Achse (54) zu einer Rotation in der Lage ist; und
einen rechten Führungsblock (53), welcher auf einer zweiten Achse (55) die parallel zur ersten Achse (53) angeordnet ist, zu einer Rotation fähig ist;
wobei die genannten zweiten Antriebsmittel mit dem linken und dem rechten Führungsblock verbunden sind um diese Führungsblöcke (52, 53) intermittierend in umgekehrten Richtungen auf den ersten und zweiten Achsen (54, 55) in eine Rotationsbewegung zu versetzen.

14. Vorrichtung nach einem der Ansprüche 11-13, wobei die Führungsmittel weiter umfassen; Führungsräder (50, 51; 72, 73), welche mit einer Umfangsrille für die Zugträgerelemente versehen sind, wobei die Führungsräder (72, 73; 50, 51) drehbar an den Führungsblöcken (52, 53; 60, 61) zumindest vermittels zwischengeschalteter Elemente (64, 65) befestigt sind.

15. Vorrichtung nach Anspruch 14, wobei die Führungsräder (72, 73) an den Führungsblöcken (60, 61) mit gegeneinander geneigter Orientierung drehbar befestigt sind.

16. Vorrichtung nach Anspruch 14 oder 15, wobei Stangen (64, 65) als zwischengeschaltete Elemente, jeweils linear beweglich innerhalb der Führungsblöcke (60, 61) vorgesehen sind, wobei die Führungsräder (72, 73) drehbar an den beweglichen Stangen (64, 65) angebracht sind und wobei Kopplungsmittel (66-71) vorgesehen sind zur Kopplung der beiden Stangen (64, 65) derart, dass diese gezwungen sind, sich jeweils in unterschiedlichen Richtungen zu bewegen.

17. Vorrichtung nach einem der Ansprüche 11-16, wobei die ersten und zweiten Antriebsmittel (22, 40; 63) Schrittmotoren mit variabler Geschwindigkeit sind.

## Revendications

1. Courroie sans fin (1) comprenant une couche porteuse (3), ladite couche porteuse (3) présentant une extension longitudinale,
ladite couche porteuse (3) étant constituée d'une quantité paire d'éléments porteurs (5,6;8-11) en forme de corde,
les dits éléments porteurs (5,6;8-11) s'étendant à l'intérieur de ladite couche porteuse (3) dans le sens des aiguilles d'une montre ou dans le sens contraire, en pluralité mais avec au moins plus d'un tour complet chacun, les dits éléments porteurs (5,6;8-11) formant chacun un angle d'attaque par rapport à ladite extension longitudinale seulement à l'intérieur d'une zone de transition longitudinale limitée (A;A1,A2);
lesdits éléments porteurs (5,6;8-11) s'étendant chacun parallèlement à ladite extension longitudinale en dehors de ladite zone de transition (A;A1,A2) ; et
lesdits éléments porteurs (5,6;8-11) étant disposés en paires en symétrie spéculaire par rapport à la ligne médiane (7) de la courroie (1).

2. Courroie selon la revendication 1, lesdits éléments porteurs (5,6;8-11) présentant chacun des extrémités extérieures (5.1,5.2,6.1,6.2;8.1,8.2-11.1, 11.2),celles-ci étant chacune situées en dehors desdites zones de transition (A;A1,A2) et à l'intérieur de ladite couche porteuse (3).

3. Courroie selon la revendication 2, lesdites extrémités extérieures (5.1,5.2,6.1,6.2;8.1,8.2-1.1, 1.2) présentant des surfaces terminales et lesdites surfaces terminales étant normalement orientées dans la direction de l'extension longitudinale ou vers l'intérieur de ladite couche porteuse (3).

4. Courroie selon l'une des revendications 1 - 3, ledit angle d'attaque que forment lesdits éléments porteurs (5,6;8-11) à l'intérieur desdites zones de transition limitées (A;A1,A2) étant au moins supérieur à 45°, de préférence compris entre 70° et 89°.

5. Courroie selon l'une des revendications 1 - 4, ladite couche porteuse (3) n'étant constituée que de deux éléments porteurs (5,6) et chacun desdits éléments porteurs (5,6) s'étendant à l'intérieur de ladite couche porteuse (3) avec plus de trois mais moins de quatre tours complets.

6. Courroie selon l'une des revendications 1 - 5, lesdits éléments porteurs (5,6;8-11) présentant chacun des extrémités extérieures (5.1,5.2,6.1, 6.2;8.1,8.2-11.1,11.2), les extrémités extérieures des différentes paires d'éléments porteurs (8,9; 10,11) étant décalées longitudinalement les unes par rapport aux autres.

7. Méthode de fabrication d'une courroie sans fin (1) comprenant une couche porteuse (3) et telle que revendiquée dans l'une des revendications 1 à 6, incluant une étape d'enroulement des éléments porteurs (5,6;8-11) en paires, en symétrie spéculaire par rapport à la ligne médiane (7) de la courroie, en pluralité, mais avec au moins plus d'un tour complet pour chacun et avec formation d'un angle d'attaque par rapport à l'extension longitudinale de la courroie (1) uniquement à l'intérieur d'une zone de transition longitudinale limitée (A;A1,A2) et en parallèle à ladite extension longitudinale en dehors de ladite zone de transition (A;A1,A2).

8. Méthode selon la revendication 7, deux éléments porteurs (5,6;8,9;10,11) au moins étant enroulés simultanément.

9. Méthode selon l'une des revendications 7 ou 8, les extrémités extérieures (5.1,5.2,6.1,6.2;8.1,8.2-11.1,11.2) desdits éléments porteurs (5,6;8-11) étant obtenues par coupe réalisée lors de l'achèvement de leur enroulement, en dehors desdites zones de transition (A;A1;A2).

10. Méthode selon la revendication 9, ladite coupe étant effectuée de manière à ce que les surfaces terminales ou de coupe en résultant soient normalement orientées dans la direction de ladite extension longitudinale ou vers l'intérieur de ladite couche porteuse (3).

11. Dispositif permettant l'application de la méthode telle que revendiquée dans une des revendications 7 - 10 comprenant:
une poulie à former les courroies (18) dont la largeur correspond exactement à celle d'une courroie unique (1);
des premiers moyens d'entraînement (22) faisant tourner ladite poulie à former les courroies (18); une poulie mobile (24) placée dans l'alignement de ladite poulie à former les courroies (18) et à une distance variable de celle-ci;
deux moyens de guidage (35,36;52,53;60,61) pour guider de manière synchronisée au moins une paire des éléments porteurs (5,6) pendant l'enroulement de ceux-ci;
des seconds moyens d'entraînement (40;63) pour donner de manière intermittente un mouvement auxdits moyens de guidage (35,36;52,53;60,61) pendant la rotation de ladite poulie à former les courroies (18) dans une direction parallèle aux axes de rotation de ceux-ci; et
des moyens de contrôle (42) pour surveiller la relation entre la vitesse de rotation de ladite poulie à former les courroies (18) et la vitesse du mouvement desdits moyens de guidage (35,36;52,53;60,61), lesdits moyens de contrôle (42) permettant ledit mouvement desdits moyens de guidage (35,26;52,53;60,61) juste avant l'achèvement de chaque rotation complète d'un élément de compression (2) monté sur la poulie à former les courroies (18) et la poulie mobile (24), juste pour un laps de temps donné, de manière à ce que le mouvement de translation soit achevé avant que le laps de temps requis pour une rotation complète dudit élément de compression (2) ne soit écoulé, donnant ainsi auxdits moyens de guidage (35,36;52,53;60,61) un mouvement de translation par paliers.

12. Dispositif selon la revendication 11, lesdits moyens de guidage comprenant:
une tige filetée (38;62) partiellement filetée vers la gauche et partiellement filetée vers la droite entraînée en rotation par lesdits seconds moyens d'entraînement (40;63);
un bloc de guidage gauche (35;60) avec un filet interne vers la gauche, monté sur ladite partie filetée vers la gauche de ladite tige filetée (38;63) ;et
un bloc de guidage droit (36;61) avec un filet interne vers la droite monté sur ladite partie filetée vers la droite de la tige filetée (38;63).

13. Dispositif selon la revendication 11, lesdits moyens de guidage comprenant:
un bloc de guidage gauche (52) pouvant effectuer un mouvement rotationnel autour d'un premier axe (54);
et
un bloc de guidage droit (53) pouvant effectuer un mouvement rotationnel autour d'un second axe (55) orienté parallèlement audit premier axe (53) ;
lesdits seconds moyens d'entraînement étant reliés auxdits blocs de guidage gauche (52) et droit (53) pour donner à ceux-ci un mouvement rotationnel de manière intermittente et dans des directions opposées autour des premier et second axes (54,55).

14. Dispositif selon l'une des revendications 11 - 13, lesdits moyens de guidage comprenant en outre des roues de guidage (50,51;72,73) pourvues d'une gorge circonférentielle pour les éléments porteurs, lesdites roues de guidage pouvant étant fixées de manière rotative sur lesdits blocs de guidage (52,53;60,61) au moins par le biais d'éléments intermédiaires (64,65).

15. Dispositif selon la revendication 14, lesdites roues de guidage (72,73) étant fixées de manière rotative sur lesdits blocs de guidage (60,61) avec une orientation inclinée l'une par rapport à l'autre.

16. Dispositif selon la revendication 14 ou 15, sur lequel on a prévu des barres (64,65) servant d'éléments intermédiaires et étant chacune mobiles linéairement à l'intérieur des blocs de guidage (60,61), lesdites roues de guidage (72,73) étant fixées de manière rotative sur lesdites barres mobiles (64,65) et sur lequel on a prévu des moyens d'accouplement (66-71) pour joindre les deux barres (64,65) de manière à ce que celles-ci soient contraintes à toujours se déplacer dans des directions opposées.

17. Dispositif selon l'une des revendications 11 -16, lesdits premiers et seconds moyens d'entraînement (22,40;63) étant des moteurs pas à pas à vitesse variable.
